# FASCICULE DE BREVET EUROPEEN

(11) **EP 2 609 643 B1**
(45) Date de publication et mention de la délivrance du brevet: **11.06.2014**
(21) Numéro de dépôt: 11746253.1
(22) Date de dépôt: 23.08.2011
(51) Int. Cl.: H01M 2/02, H01M 2/30, H01M 10/04, H01M 4/02, H01M 2/16, H01M 2/18, H01M 10/0525

(54) **ACCUMULATEUR ELECTROCHIMIQUE BIPOLAIRE A EMBALLAGE AMELIORE**
ZWEIPOLIGE BATTERIEZELLE MIT OPTIMIERTEM GEHÄUSE
BIPOLAR ELECTROCHEMICAL BATTERY WITH AN IMPROVED CASING

(30) Priorité: 24.08.2010 FR 1056731
(43) Date de publication de la demande: 03.07.2013
(73) Titulaire: Commissariat à l'Énergie Atomique et aux Énergies Alternatives, 75015 Paris (FR)
(72) Inventeur: CHAMI, Marianne, F-38600 Fontaine (FR); PICARD, Lionel, F-38170 Seyssinet (FR)
(74) Mandataire: Ilgart, Jean-Christophe
(86) Numéro de dépôt international: PCT/EP2011/064417
(87) Numéro de publication internationale: WO 2012/025505

(56) Documents cités:
- EP-A1- 2 214 247
- JP-A- 2005 259 379

## Description

### DOMAINE TECHNIQUE

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne plus particulièrement un accumulateur électrochimique au lithium comportant au moins un collecteur de courant à fonction bipolaire, aussi appelé batterie bipolaire : dans une telle batterie bipolaire, le collecteur bipolaire, aussi appelé électrode bipolaire, supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

L'invention vise à réaliser un nouvel emballage d'accumulateur électrochimique et plus particulièrement celui d'une batterie bipolaire et vise à remplacer les emballages de type souple ou rigide connus.

### ART ANTÉRIEUR

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733 ;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

Afin d'augmenter le potentiel moyen d'un accumulateur Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une cathode d'une cellule et une anode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreuses demandes de brevets ou brevets concernant de telles batteries bipolaires, tels que US 7279248, US 7220516, US 7320846, US 7163765, WO 03/047021, WO 2006/061696, US 7097937, US 2007/00115047.

Les avantages subséquents d'une batterie bipolaire sont d'avoir une masse, une résistance électrique réduite et de ne pas comporter de volumes inutiles.

La principale difficulté de conception d'une batterie bipolaire est la réalisation de compartiments parfaitement étanches à l'électrolyte, en général sous forme liquide, les uns vis-à-vis des autres. En effet, une mauvaise étanchéité entraine un dysfonctionnement de la batterie bipolaire.

Cela est d'ailleurs corroboré par le fait que la majorité de la littérature brevets portant sur le domaine des batteries Li-ion bipolaires concerne des solutions d'étanchéité pour éviter les fuites d'électrolyte d'un compartiment à l'autre (courts circuits ioniques).

Parmi les demandes de brevet ou brevets déjà cités ci-dessus, on peut citer le brevet US 7220516 qui décrit une solution d'étanchéité entre compartiments avec un film adhésif flexible collé sur la périphérie du collecteur bipolaire. On peut également citer le brevet US 7320846 qui décrit une solution d'enrobage des collecteurs et électrolytes dans une résine. On peut également citer le brevet US 7163765 qui décrit une solution d'étanchéité avec des entretoises mixtes en polyamide/PP agencées entre collecteurs bipolaires, le polyamide étant soudé directement à la périphérie des collecteurs à distance des cellules). Le brevet US 7097937 propose quant à lui une solution d'étanchéité double puisqu'une barrière intérieure en fluoropolymère est agencée sur la périphérie du collecteur bipolaire et un cadre extérieur en élastomère est agencée à l'extérieur de la barrière sur et autour du collecteur bipolaire avec éventuellement l'agencement d'une bague supplémentaire en élastomère sur le collecteur. Enfin, on peut citer la demande de brevet EP 2073300 au nom de la demanderesse qui propose une solution selon laquelle les dimensions des plaques sont augmentées l'une par rapport à l'autre adjacente et les joints d'étanchéité interposés entre les plaques interconnectrices sont décalés transversalement afin que deux joints ne se trouvent pas au droit l'un de l'autre selon l'axe d'empilement des cellules.

Ainsi, on peut résumer de la manière suivante les solutions déjà envisagées pour améliorer l'étanchéité des compartiments entre eux vis-à-vis de l'électrolyte liquide dans une batterie bipolaire Liion :
- réalisation systématique de l'électrode bipolaire sous la forme d'une plaque enduite de part et d'autre par des matériaux de polarités différentes ;
- utilisation de colles ou résines diverses à la périphérie de la plaque pour une étanchéité entre compartiments, qui peut être renforcée par l'étanchéité globale de la batterie appelée emballage ;
- augmentation du format de plaque de collecteur de courant bipolaire pour créer une barrière supplémentaire à l'électrolyte.

Dans certaines batteries bipolaires, l'électrolyte liquide et le séparateur largement utilisés peuvent être remplacés par un conducteur ionique (gel ou polymère conducteur) dit « tout solide ». L'étanchéité entre compartiments peut alors être supprimée et seule persiste l'étanchéité globale (emballage) de l'élément bipolaire.

On désigne par la suite « élément bipolaire » et dans le cadre de l'invention, l'empilement formé par l'ensemble des électrodes bipolaires, cellules électrochimiques avec leur électrodes monopolaires de part et d'autre de l'empilement et réalisant une architecture de batterie bipolaire.

Selon le type d'application visée, on cherche à réaliser soit un élément bipolaire lithium-ion flexible soit un élément bipolaire rigide : l'emballage est alors soit souple, soit rigide et constitue en quelque sorte un boitier.

A ce jour, les emballages souples peuvent être fabriqués à partir d'un matériau multicouche constitué typiquement d'un empilement de couches d'aluminium recouvertes par un polymère. Dans la plupart des cas, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries. Ce type d'emballage souple fabriqué à partir d'un empilement de couches en aluminium fourni par la société Showa Denko est commercialisé par exemple sous les références N° ADR-ON25/AL40/CPP40 ou N° ADR-ON25/AL40/CPP80. Les emballages souples peuvent être également constitués par une résine qui enrobe l'élément soit à sa périphérie soit sur toute sa surface externe pour renforcer l'étanchéité des compartiments entre eux comme décrit dans la demande de brevet JP 2000030746. Mais dans ces cas, les deux types d'emballages souples cités ne permettent pas l'application d'une pression sur l'élément bipolaire. Or, l'application d'une pression en surface, de part et d'autre de l'élément bipolaire est inévitable pour son bon fonctionnement plus particulièrement lorsqu'il comprend un nombre de compartiments électrochimiques supérieur à deux.

Les emballages rigides sont de ce point de vue satisfaisants car ils permettent de maintenir une pression suffisante de part et d'autre de la surface de l'élément bipolaire afin d'assurer un bon contact entre les électrodes et le séparateur dans chacun des compartiments. On peut indiquer que la fonction de tels emballages rigides se limite alors finalement seulement à une mise en pression de l'élément bipolaire, puisqu'au préalable chacun des compartiments est déjà étanchéifié vis-à-vis de l'air et de l'électrolyte liquide par les solutions mentionnées ci-dessus. Un exemple de tels emballages rigides est décrit dans le brevet US 5, 595, 839 : la solution consiste à placer l'élément bipolaire dans un boitier formé de deux demi-coquilles vissées entre elles de sorte à maintenir un contact optimal entre chacune des parties actives de l'élément bipolaire. Ce boitier est un boitier expérimental qui ne pourra pas être utilisé en tant qu'emballage industriel dans la mesure où il est lourd, ce qui implique une énergie massique résultante pour la batterie qui est faible. Un autre exemple est donné dans le brevet US 5, 618, 641 dans lequel le système de mise en pression de l'élément bipolaire Li-ion constitue un emballage rigide lourd muni de ressorts.

Ainsi, les emballages rigides actuellement utilisés peuvent avoir un poids important et la batterie Li-ion résultante présente également une faible énergie massique.

Le but de l'invention est alors de proposer un nouvel emballage pour accumulateur électrochimique bipolaire, tel qu'un accumulateur bipolaire Li-ion afin de constituer une batterie bipolaire et qui ne présente pas les inconvénients des emballages selon l'art antérieur.

### EXPOSE DE L'INVENTION

Pour ce faire, l'invention a pour objet un accumulateur électrochimique bipolaire au lithium comprenant au moins un élément bipolaire, et un emballage encapsulant l'élément bipolaire, caractérisé en ce que l'emballage est constitué d'un matériau composite, comprenant une matrice et au moins un renfort poreux, dont la matrice comprend au moins un polymère durci imprégnant le(s) renfort(s) poreux, le(s) renfort(s) poreux et le(s) polymère(s) durci(s) enrobant l'élément bipolaire et maintenant une pression déterminée de part et d'autre de ce dernier de sorte à maintenir un contact déterminé entre ses constituants.

Ainsi, selon l'invention, on définit un emballage bifonctionnel comprenant au moins deux parties, à savoir :
- au moins un renfort poreux qui est nécessaire pour maintenir un contact optimal entre les composants de l'élément bipolaire Li-ion et qui évite lors de la mise sous pression du (des) polymère(s) que celui-ci (ceux-ci) flue vers l'extérieur et donc n'assure pas de fonction de maintien de pression des constituants de l'élément bipolaire,
- au moins un polymère durci imprégnant le renfort poreux, tel qu'une résine mono composante ou bicomposante, chargée ou non avec des éléments de renfort et qui assure une étanchéité.

Alors que la matrice (polymère(s) durci(s)) et le(s) renfort(s) poreux enrobent complètement l'élément bipolaire Li-ion, une pression sera exercée sur ses surfaces de part et d'autre. Le(s) polymère(s) pénètre(nt) alors les interstices du renfort. Une fois que la résine a durcie, la pression exercée sur l'élément bipolaire Li-ion, typiquement obtenue par une presse, est maintenue par le composite formé et l'élément bipolaire enrobé peut être retiré de la presse.

L'architecture bipolaire Li-ion permet d'envisager un autre type d'emballage. En effet, l'électrolyte liquide est déjà piégé dans chacun des compartiments de l'élément bipolaire et isolé de l'extérieur (les compartiments sont étanches aux gaz et à l'électrolyte). La fonction de l'emballage pour un élément bipolaire se réduit alors au maintien d'une pression pour un contact optimal entre les composants (électrodes, séparateurs) de l'élément bipolaire Li-ion. Si toutefois, l'étanchéité doit être renforcée, une double enveloppe (résine) peut être ajoutée sur toute la surface externe de l'élément bipolaire.

Un renfort selon l'invention peut être un tissu comme un taffetas, serge, satin, ... ou autre avec une armure différente. Il peut également être non tissé (mat). Le renfort selon l'invention peut être constitué de fibres longues ou de fibres courtes.

Le matériau de renfort(s) selon l'invention peut consister en des oxydes et hydrates métalliques ou des charges organiques (charges cellulosiques utilisées en tant que charges des résines thermodurcissables), minérales (craies de carbonates, silices, talcs (qui apportent une isolation thermique et une résistance à l'eau), wollastonite (principalement utilisée avec les polyamides), argiles et alumino-silicates.

Un renfort selon l'invention peut contenir des fibres de verre (fibres coupée, poudre, billes creuses, microsphères), de carbone (noir de carbone, nanotubes de carbone, fibres de carbones coupées), de cellulose, de silice (ou de quartz), d'aramide, de bore, polyéthylène de module élevé, ou des fibres naturelles (maïs, bananier, cocotier ...).

Un renfort selon l'invention peut appartenir à chacune des familles ci-dessus ou être composé d'un mélange des familles ci-dessus.

De préférence, un renfort selon l'invention est un matériau à base de fibres ou constitué par un tissu qui permettent de figer aisément l'épaisseur du composite, c'est-à-dire l'épaisseur totale de la matrice et du renfort.

Un renfort selon l'invention peut être non conducteur (parmi la liste donnée ci-dessus) et enrober la totalité de l'élément bipolaire.

Un renfort selon l'invention peut aussi être non conducteur (parmi la liste donnée ci-dessus) mais recouvert d'un coating de laque métallique.

Avantageusement, un renfort selon l'invention est au moins en partie conducteur. On veille alors à ce que les faces supérieure et inférieure de l'élément bipolaire ne soient recouvertes que partiellement pour éviter tout court-circuit électrique entre les deux faces. Un cadre périphérique non conducteur, constitué par exemple d'un tissu non conducteur imprégné d'une résine est alors placé en périphérie de l'élément bipolaire.

Un renfort selon l'invention peut être une grille de collecteur de courant (Al ou Cu) de maillage relativement fin (< 1 mm de préférence), pour que la surface de l'élément bipolaire ne soit pas sujette à des phénomènes de « vagues » dues au maillage.

En tant que polymère(s) d'imprégnation qui conviennent dans le cadre de l'invention, on peut envisager :
- des résines thermodurcissables (Polyesters saturés ou insaturés, Vinylesters, Epoxy, polyuréthanes et polyurées, polyimides, bismaléimides, ...) ; un renfort avec des fibres longues peut alors être envisagé du fait de la stabilité thermique, chimique et dimensionnelle apportée par la réticulation ;
- des matrices thermoplastiques, dont des matrices en polyamide, polycarbonate, polyamide-imide, polyéther-imide ; dans le cas de matrices thermoplastiques employées en complément des fibres longues tressée ou non, un renfort supplémentaire à l'aide de fibres courtes peut alors être envisagé pour une tenue thermique et mécanique améliorées et une bonne stabilité dimensionnelle.

On peut préférentiellement employer des résines époxy, polyuréthane, polyimides, acrylique ou styrèniques avec une température de transition vitreuse Tg élevée qui sont donc rigides à température ambiante. Ces résines ont l'avantage de résister à d'éventuelles fuites d'électrolyte qui pourraient se produire au niveau de l'élément bipolaire qu'elles emprisonnent.

On peut aussi avantageusement utiliser des résines monocomposantes, bicomposantes ou des résines photopolymérisables sous rayonnement UV afin que leur durcissement se fasse à température ambiante et ainsi qu'il ne soit pas nécessaire de réaliser un chauffage.

Des résines non chargées ou chargées pourront être employées. Les résines sont de préférence non conductrices, même si des résines conductrices peuvent être employées pour recouvrir seulement la surface active (ou une partie de la surface active) de l'élément.

De préférence, le(s) renfort(s) poreux est (sont) constitué(s) d'au moins deux parties, dont une sur chaque face de l'élément bipolaire.

Selon une variante, les pôles formant bornes de charge de l'accumulateur sont constitués par des languettes qui s'étendent vers l'extérieur dans l'épaisseur de l'accumulateur en faisant saillie du (des) polymère(s) durci(s).

Selon une autre variante, les pôles formant bornes de charge de l'accumulateur sont constitués par aux moins deux plots, dont un agencé sur une face de l'accumulateur et l'autre de polarité opposée agencé sur l'autre face de l'accumulateur. Selon cette variante, les pôles sont constitués par au moins quatre plots, chaque face de l'accumulateur comprenant au moins deux pôles dont un négatif et un positif avec un pôle dans chaque coin et les deux pôles d'une face sont en regard chacun des deux pôles de l'autre face, deux pôles d'un même coin étant de même polarité.

Un mode de réalisation préféré consiste en un matériau composite avec le(s) renfort(s) poreux à base de fibres de carbone et une résine époxy en tant que polymère durci.

L'invention a également pour objet un procédé de réalisation d'un emballage d'un accumulateur électrochimique bipolaire au lithium comprenant un élément bipolaire, selon lequel on réalise les étapes suivantes:
a/ mise en place d'un sous-ensemble comprenant un élément bipolaire entre deux parties d'au moins un renfort poreux imprégnées par au moins un polymère ou un ou plusieurs monomères dans un moule,
b/ application d'une pression déterminée de part et d'autre des deux parties de renfort imprégnées du sous-ensemble dans le moule jusqu'au durcissement du (des) polymère(s).

Pour l'étape a/, on peut envisager une imprégnation des deux parties de renfort poreux après mise en place de celles-ci nues autour de l'élément bipolaire.

De manière alternative, on peut envisager des parties de renfort poreux préimprégnées par au moins un polymère ou un ou plusieurs monomères (aussi désignés en anglais par le terme « prepreg »).

Pour réaliser l'étape b/ du procédé selon l'invention, une presse est utilisée pour appliquer la pression nécessaire pour un contact optimal entre les composants de l'élément bipolaire. Des mesures de résistances internes réalisées sur des éléments bipolaires avec un nombre de compartiments différent, ont révélées que la pression à exercer dépend du nombre de compartiment empilés. Par exemple, pour un élément bipolaire d'une capacité de 700 mAh, comportant un nombre compris entre 1 et 13 compartiments empilés, il s'avère que la pression à exercer varie de 0.05 MPa à 0.5 MPa.

On réalise de préférence l'étape b/ à température ambiante.

Un renfort selon l'invention est de préférence apte à maintenir une porosité suffisante, typiquement d'environ 40% sous une pression pouvant atteindre 0.5 MPa, pour permettre une bonne imprégnation du renfort par la résine pendant la mise en pression.

L'invention concerne enfin un assemblage, communément désigné par « pack batterie » réalisé à partir d'une pluralité d'accumulateurs bipolaires selon l'invention.

Un assemblage peut consister en une mise en série électrique d'accumulateurs à plots, par un empilement d'accumulateurs définis ci-dessus dans lequel les plots de polarité inverse entre deux accumulateurs adjacents sont en contact.

Un autre assemblage peut consister en une mise en parallèle électrique d'accumulateurs à plots, par une rangée d'accumulateurs définis ci-dessus, dans lequel les plots de même polarité sont reliés entre eux par une barrette de connexion électrique.

Un autre assemblage peut consister en une mise en parallèle d'accumulateurs à plots, par un empilement d'accumulateurs définis ci-dessus, dans lequel les plots de même polarité entre deux accumulateurs adjacents sont en contact.

Avantageusement, tous les accumulateurs d'un même assemblage ont une même puissance unitaire, typiquement de l'ordre de 15Wh.

### BRÈVE DESCRIPTION DES DESSINS

D'autres avantages et caractéristiques de l'invention peuvent ressortir à la lecture de la description détaillée faite à titre illustratif et non limitatif en référence aux figures suivantes qui représentent respectivement :
- la figure 1 est une vue schématique en coupe longitudinale d'une batterie bipolaire au lithium selon l'état de l'art sans son emballage,
- la figure 2A est une vue de face montrant un élément bipolaire selon l'invention sans son emballage,
- la figure 2B est une vue de face montrant un accumulateur bipolaire lithium-ion comprenant un élément bipolaire avec son emballage souple selon l'état de l'art,
- la figure 2C est une vue de face montrant un accumulateur bipolaire lithium-ion comprenant un élément bipolaire avec son emballage rigide selon l'état de l'art,
- les figures 3A à 3D sont des vues schématiques en perspective éclatée montrant les différentes étapes de réalisation d'un accumulateur bipolaire lithium-ion avec son emballage selon l'invention,
- la figure 3E est une vue en perspective d'un accumulateur bipolaire lithium-ion avec son emballage selon l'invention obtenu selon le procédé des étapes 3A à 3D ;
- les figures 4A et 4B sont respectivement une vue en perspective finie et une vue en perspective éclatée d'un accumulateur bipolaire lithium-ion avec son emballage et ses pôles selon une variante de l'invention ;
- les figures 5A et 5B sont respectivement une vue en perspective finie et une vue en perspective éclatée d'un accumulateur bipolaire lithium-ion avec son emballage et ses pôles selon une autre variante de l'invention ;
- les figures 6A et 6B sont respectivement une vue en perspective finie et une vue en perspective éclatée d'un assemblage en série d'une pluralité d'accumulateurs selon les figures 5A et 5B ;
- la figure 7 est une vue en perspective éclatée d'un assemblage en parallèle d'une pluralité d'accumulateurs selon les figures 5A et 5B ;
- la figure 8 est une vue en perspective finie d'un accumulateur bipolaire lithium-ion avec son emballage et ses pôles selon une variante de l'invention ;
- les figures 9A et 9B sont respectivement une vue en perspective finie et une vue en perspective éclatée d'un assemblage en parallèle d'une pluralité d'accumulateurs selon la figure 8.

### EXPOSÉ DÉTAILLÉ DE MODES DE RÉALISATION PARTICULIERS

On précise ici que les termes « conducteur » et « non conducteur » sont utilisés en référence à la conductivité électrique.

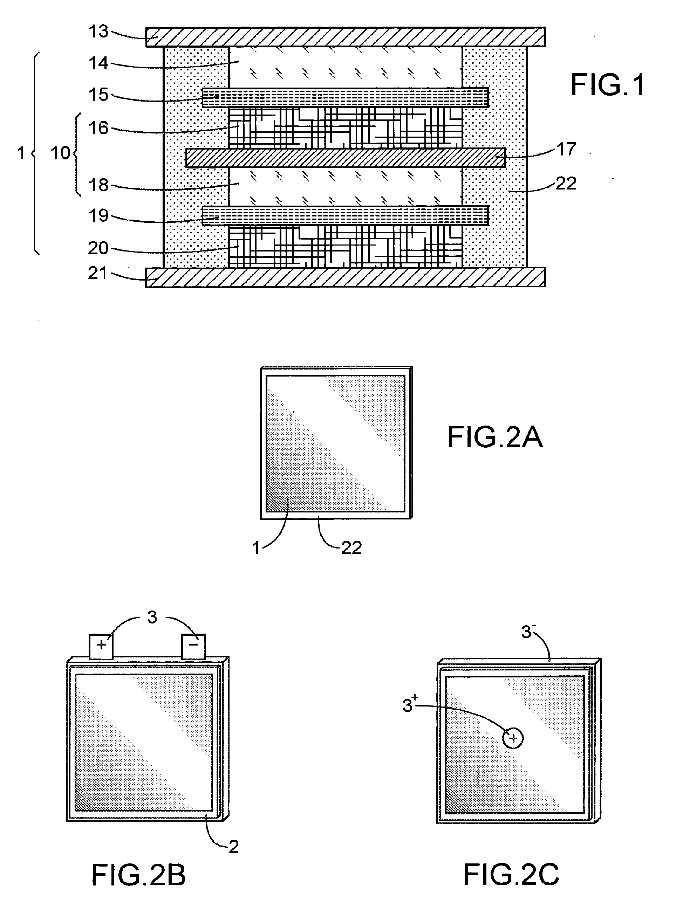

On a représenté une batterie bipolaire Li-ion selon l'état de l'art en figure 1, telle qu'elle est illustrée dans la demande de brevet WO 03/047021, sans son emballage.

Cette batterie comporte en partie supérieure un substrat conducteur en aluminium 13 (collecteur de courant terminal positif) et une couche active 14 à base de matériau d'insertion au lithium positif, tel que du Li_{1.04}Mn_{1.96}O₄ et en partie inférieure un substrat conducteur en aluminium 21 (collecteur de courant terminal négatif) et une couche active 20 à base de matériau d'insertion au lithium négatif, tel que du Li₄Ti₅O₁₂.

Au sein de cette batterie, un élément bipolaire 1 avec une électrode bipolaire 10, aussi appelé collecteur de courant bipolaire, comprend une couche active positive 18 et une couche active négative 16 de part et d'autre d'un substrat conducteur en aluminium 17 sous la forme d'une plaque.

Les électrodes inférieures 20 et supérieure 14 sont séparées de l'électrode bipolaire 1 par deux séparateurs 15, 19 dans lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 17.

Un élément bipolaire 1 à au moins deux compartiments que l'on cherche à emballer selon l'invention est donc constitué des éléments 14, 15, 16, 17, 18, 19, 20 avec son joint 22 comme mieux représenté en figure 2A.

Un accumulateur bipolaire Lithium ion avec son emballage souple 2 selon l'état de l'art est représenté en figure 2B. Les pôles 3+, 3- sont ici constitués par des lamelles qui s'étendent dans un plan transversal à l'extérieur de l'emballage 2.

Un accumulateur bipolaire Lithium ion avec son emballage rigide selon l'état de l'art est représenté en figure 2C. Les pôles 3+, 3- sont ici constitués par des plots métalliques sur les faces avant et arrière de l'emballage 2.

Ainsi, les emballages des accumulateurs bipolaire Li-ion souples ou rigides selon l'état de l'art permettent, une fois scellés ou soudés, d'une part de cloisonner l'électrolyte liquide et d'éviter tout échange gazeux avec l'air ambiant et d'autre part de réaliser un contact optimal entre les composants de l'élément bipolaire (figure 2C).

Cependant, les emballages rigides peuvent avoir un poids important.

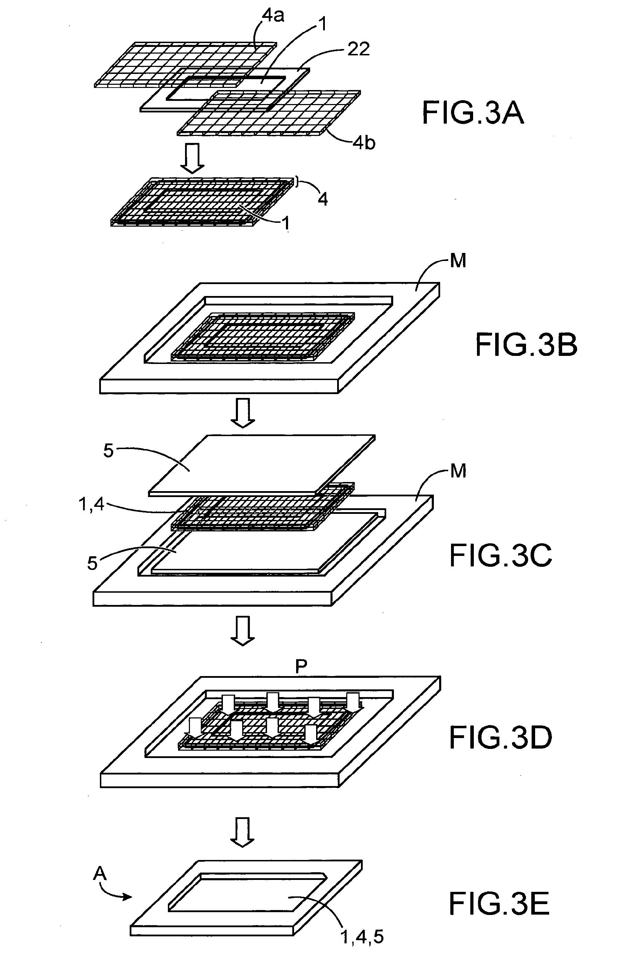

On a représenté en figure 3 E, un accumulateur bipolaire selon l'invention avec un élément bipolaire 1 fournissant une tension de 24V, et constitué d'un nombre de treize compartiments unitaires avec des matériaux de cathode et d'anodes respectivement LiFePO_{4/}Li₄Ti₅O₁₂. L'élément bipolaire 1 est encapsulé dans un emballage rigide constitué d'un matériau composite comportant une résine époxy 5 et un tissu 4 de fibres de carbone.

Pour réaliser cet accumulateur 1 à emballage rigide on a procédé de la manière suivante :

### Etape 1 :

L'épaisseur de l'élément bipolaire 1 seul est 3 mm. L'épaisseur de chaque partie 4a, 4b du tissu 4 de fibres de carbone employé est de l'ordre de 1mm, et typiquement inférieur à 5mm.

Deux parties 4a, 4b de tissu bidirectionnel 4 de fibres de carbone est disposé sur toute la surface de l'élément bipolaire 1 au préalable étanchéifié avec une résine 22 à sa périphérie: les deux parties 4a, 4b du renfort poreux 4 débordent ainsi de la surface de l'élément polaire 1 sur une largeur périphérique au moins égale à 2 mm (figure 3A).

### Etape 2 :

Un moule M dont les dimensions sont choisies pour être de l'ordre des dimensions finales de l'assemblage que l'on souhaite obtenir est disposé sur les plateaux d'une presse (figure 3B).

Ensuite, l'élément bipolaire 1 recouvert du tissu 4 en fibres de carbone est posé dans le moule (figure 3C).

Sur le fond du moule est déposée une résine 5. La même résine 5 est déposée sur le dessus (partie 4a) du tissu 4. La résine 5 est de préférence une résine époxy.

On peut aussi prévoir d'enrouler l'élément bipolaire dans un unique tissu 4 de fibres pré-imprégné de résine (désigné en anglais sous le terme « prepreg »), ce qui permet de ne pas avoir à déposer de résine dans le moule au dessus d'une partie 4a de tissu nu.

### Etape 3 :

Une pression de l'ordre de 0.5MPa est appliquée sur le sous-ensemble. La pression sera maintenue jusqu'à durcissement de la résine 5 (figure 3D).

Enfin, lorsque la résine 5 a durcie, l'élément bipolaire 1 avec son emballage rigide en matériau composite 4, 5 dans lequel il est encapsulé est retiré de la presse. L'accumulateur bipolaire Li-ion ainsi obtenu 1, 4, 5 a une épaisseur extérieure à base de résine 5 égale à l'épaisseur du tissu 4 en fibres de carbone (figure 3 E).

L'accumulateur selon l'invention représenté en figure 3E ne comprend pas de pôles positif et négatif, c'est-à-dire des collecteurs de courant terminaux.

On détaille ci-après différentes variantes de réalisation d'accumulateurs avec leurs pôles.

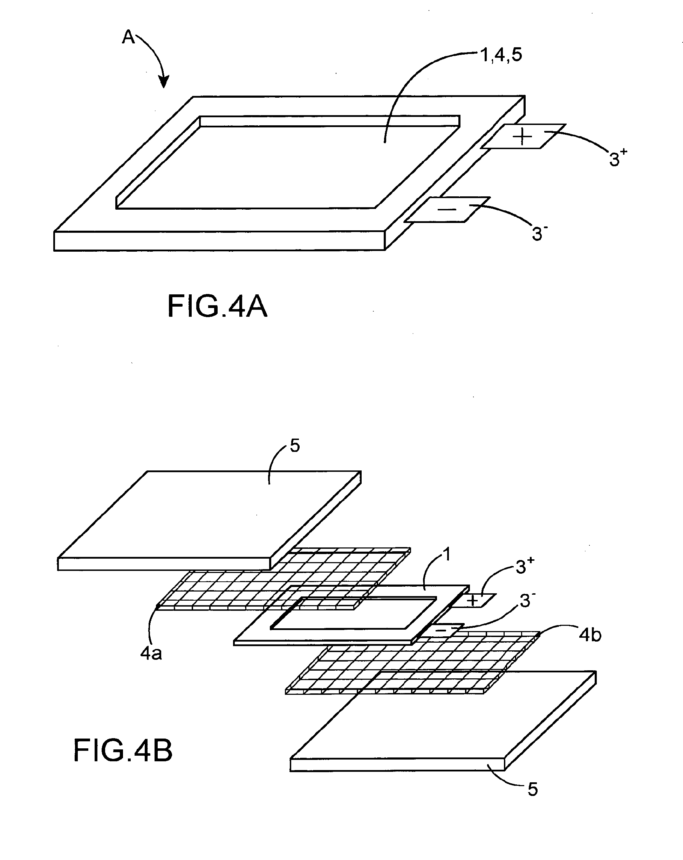

Selon une variante, on peut tout d'abord réaliser un accumulateur selon l'invention avec des pôles sous forme de deux languettes 3+, 3- qui s'étendent sur un même côté dans l'épaisseur (figure 4A). On réalise tout d'abord un élément bipolaire 1 avec des languettes 3+, 3- qui s'étendent sur un même côté vers l'extérieur dans l'épaisseur de l'élément bipolaire. La réalisation de l'accumulateur avec son emballage selon l'invention se fait alors comme expliqué précédemment en référence aux étapes 1 à 3, avec deux parties de renforts 4a, 4b sous forme de cadre de tissus ou mats non conducteurs et une résine 5 coulée sur celles-ci (figure 4B). La longueur des languettes métalliques 3+, 3- est bien évidemment choisie pour faire saillie de la résine 5 durcie, sur le côté de l'accumulateur (figure 4A).

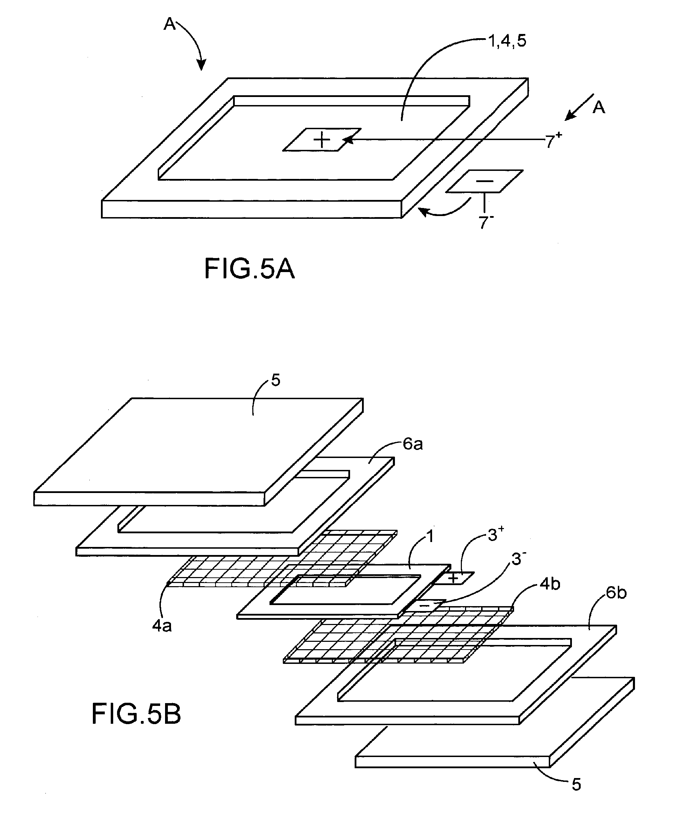

Selon une autre variante, on peut réaliser un accumulateur selon l'invention avec des pôles sous forme de deux plots 3+, 3-, chacun sur une des faces de l'emballage (figure 5A). La réalisation de l'accumulateur avec son emballage se fait alors comme expliquée précédemment en référence aux étapes 1 à 3, avec deux parties de renforts 4a, 4b sous forme de cadre de tissus ou mats conducteurs, deux parties de renforts supplémentaires 6a, 6b sous forme de cadre de tissus ou mats non conducteurs et une résine 5 coulée sur celles-ci (figure 5B). Les cadres de renforts 4a, 4b conducteurs ont sensiblement les dimensions surfaciques de la partie fonctionnelle de l'élément bipolaire 1, c'est-à-dire sans sa partie formant joint 22 sa périphérie. Les cadres de renforts supplémentaires 6a, 6b qui sont non conducteurs sont quant à eux agencés à la périphérie des cadres 4a, 4b. Des parties de feuilles métalliques 7+, 7- solidarisées aux cadres de renforts 4a, 4b conducteurs forment ainsi les plots 3+, 3-. On peut envisager de solidariser ces parties de feuilles métalliques aux cadres 4a, 4b avant le coulage de la résine 5 ou après, une fois celle-ci durcie. Dans ce dernier cas, on veille à laisser des parties de cadres 4a, 4b dégagées lors du coulage de la résine 5.

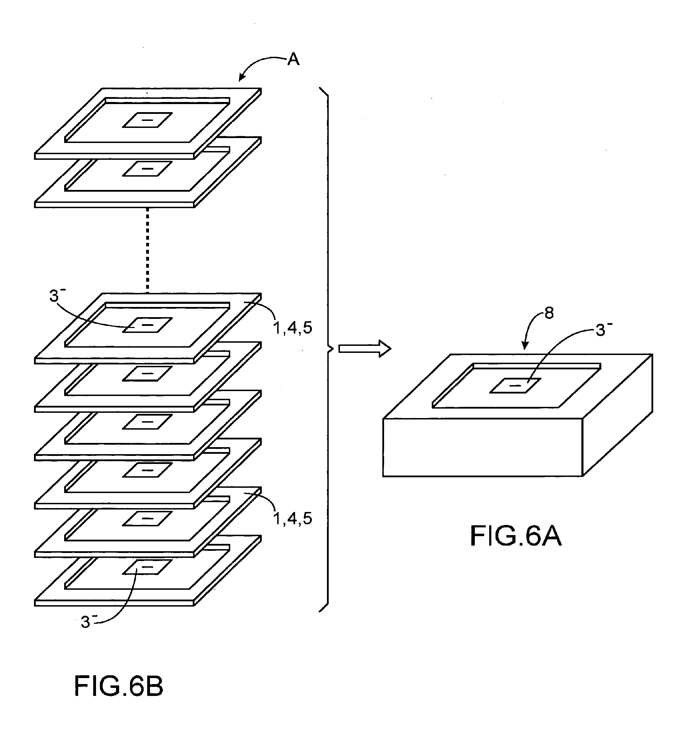

Tel que représenté en figure 6A, on peut réaliser un assemblage 8 de haute tension électrique, communément désigné par « pack-batterie », sans aucune connexion électrique supplémentaire et ce, en mettant en série plusieurs accumulateurs selon la figure 5A. Pour cela, on empile la pluralité des accumulateurs selon la figure 5A en mettant en contact les plots 3+, 3- de polarité inverse entre deux accumulateurs adjacents, comme cela est représenté en figure 6B. On précise ici que cette figure 6B étant une vue en perspective éclatée, on voit uniquement les plots 3- de même polarité pour tous les accumulateurs. Ainsi, en empilant un nombre de dix accumulateurs avec éléments bipolaires identiques de puissance unitaire égale à 15Wh, on peut obtenir un assemblage ou pack-batterie 8 apte à fournir une tension de 240V.

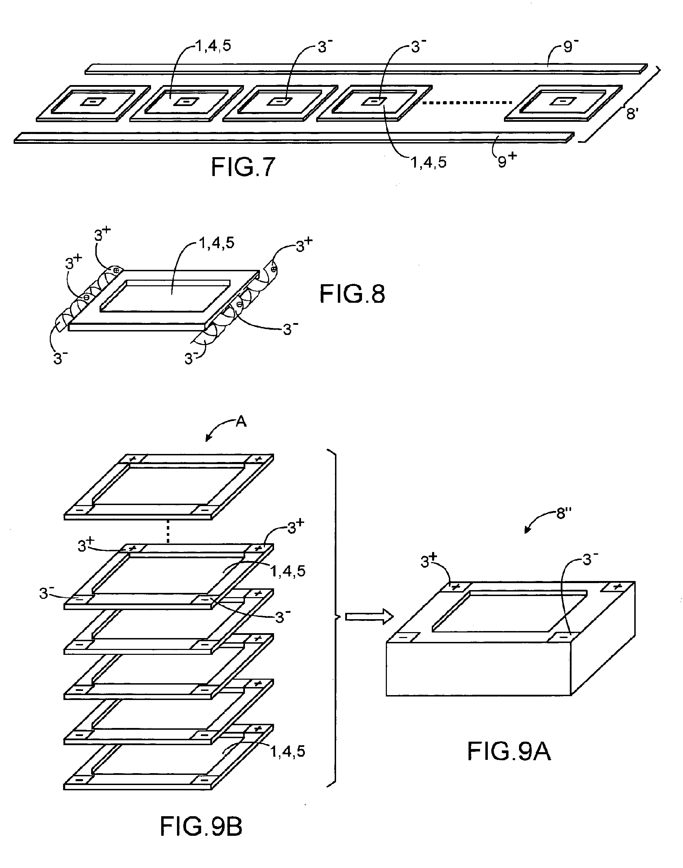

Tel que représenté en figure 7, on peut réaliser un assemblage ou pack-batterie 8' de haute énergie, avec un minimum de connexion électrique supplémentaire et ce, en mettant en parallèle plusieurs accumulateurs selon la figure 5A. Pour cela, on dispose côte-à-côte la pluralité des accumulateurs selon la figure 5A en mettant en contact les plots positifs d'une part et les plots négatifs d'autre part entre deux accumulateurs adjacents. Le nombre de connexions électrique est minimum car seules deux barrettes 9+, 9-sont rajoutées de part et d'autre de la rangée d'accumulateurs, ces barrettes 9+, 9- formant ainsi des collecteurs de courant terminaux du pack 8. Ainsi, en formant une rangée de dix accumulateurs avec éléments bipolaires identiques de puissance unitaire égale à 15Wh, on peut obtenir un assemblage ou pack-batterie 8 de puissance totale 150Wh. Les inventeurs pensent ainsi qu'un tel assemblage 8 selon la figure 7 est tout à fait adapté pour être implanté dans un véhicule automobile dit micro-hybride.

En figure 8, on a représenté schématiquement un accumulateur avec quatre pôles dont deux négatifs 3- et deux positifs 3+, tous sous forme de languettes métalliques reliées à l'élément bipolaire 1 et repliées sur les faces d'un accumulateur. Plus exactement, chaque languette 3 est repliée sur l'une des faces de l'accumulateur à un coin. Sur un même coin, deux languettes de même polarité sont repliées respectivement chacune sur une face. Autrement dit, chaque face d'un accumulateur comprend quatre pôles dont deux négatifs 3- et deux positif 3+ avec un pôle dans chaque coin et les quatre pôles d'une face sont en regard chacun des quatre pôles de l'autre face, deux pôles d'un même coin étant de même polarité.

Tel que représenté en figure 9A, on peut réaliser un assemblage ou pack-batterie 8" de haute énergie, sans aucune connexion électrique supplémentaire et ce, en mettant en parallèle plusieurs accumulateurs selon la figure 8. Pour cela, on empile la pluralité des accumulateurs selon la figure 8 en mettant en contact tous les plots 3+, 3- de polarité inverse entre deux accumulateurs adjacents, comme cela est représenté en figure 9B. Ainsi, en formant un empilement de dix accumulateurs avec éléments bipolaires identiques de puissance unitaire égale à 15Wh, on peut obtenir un assemblage ou pack-batterie 8 de puissance totale 150Wh. L'assemblage 8 " selon la figure 9B est ainsi une alternative à l'assemblage 8' selon la figure 7, pour constituer un pack-batterie de 150Wh. Un avantage important de l'assemblage des figures 9A et 9B par rapport à celui de la figure 7 est sa compacité. Il est à noter qu'il est possible de se limiter à deux plots par face mais le fait d'en agencer un à chacun des coins des cellules bipolaires comme représenté en figure 9B, permet d'améliorer la conductivité de l'assemblage ou pack électrique en résultant.

## Revendications

1. Accumulateur électrochimique bipolaire au lithium (A) comprenant au moins un élément bipolaire (1), et un emballage (4, 5) encapsulant l'élément bipolaire, **caractérisé en ce que** l'emballage est constitué d'un matériau composite comprenant une matrice et au moins un renfort poreux dont la matrice comprend au moins un polymère durci (5) imprégnant le(s) renfort(s) poreux, le(s) renfort(s) poreux (4) et le(s) polymère(s) durci(s) (5) enrobant l'élément bipolaire et maintenant une pression déterminée de part et d'autre de ce dernier de sorte à maintenir un contact déterminé entre ses constituants.

2. Accumulateur électrochimique bipolaire au lithium (A) selon la revendication 1, dans lequel le(s) renfort(s) poreux est (sont) un (des) tissu(s) et/ou un (des) mat(s).

3. Accumulateur électrochimique bipolaire au lithium (A) selon la revendication 1 ou 2, dans lequel le(s) renfort(s) poreux (4) est (sont) constitué(s) d'au moins deux parties (4a, 4b), dont une sur chaque face de l'élément bipolaire (1).

4. Accumulateur électrochimique bipolaire au lithium (A) selon l'une des revendications précédentes, dans lequel les pôles (3+, 3-) formant bornes de charge de l'accumulateur sont constitués par des languettes qui s'étendent vers l'extérieur dans l'épaisseur de l'accumulateur en faisant saillie du (des) polymère(s) durci(s).

5. Accumulateur électrochimique bipolaire au lithium (A) selon l'une des revendications 1 à 3, dans lequel les pôles (3+, 3-) formant bornes de charge de l'accumulateur sont constitués par aux moins deux plots, dont un agencé sur une face de l'accumulateur et l'autre de polarité opposée agencé sur l'autre face de l'accumulateur.

6. Accumulateur électrochimique bipolaire au lithium (A) selon la revendication 5, dans lequel les pôles sont constitués par au moins quatre plots, chaque face de l'accumulateur comprenant au moins deux pôles dont un négatif (3-) et un positif (3+) avec un pôle dans chaque coin et les deux pôles d'une face sont en regard chacun des deux pôles de l'autre face, deux pôles d'un même coin étant de même polarité.

7. Accumulateur électrochimique bipolaire au lithium (A) selon l'une des revendications 2 à 6, dans lequel le(s) renfort(s) poreux sont à base de fibres de carbone et le polymère durci est une résine époxy.

8. Procédé de réalisation d'un emballage d'un accumulateur électrochimique bipolaire au lithium (A) comprenant un élément bipolaire selon lequel on réalise les étapes suivantes:
a/ mise en place d'un sous-ensemble comprenant un élément bipolaire (1) entre deux parties (4a, 4b) d'au moins un renfort poreux imprégnées par au moins un polymère (5) ou un ou plusieurs monomères dans un moule M,
b/ application d'une pression P déterminée de part et d'autre des deux parties de renfort imprégnées du sous-ensemble dans le moule jusqu'au durcissement du (des) polymère(s).

9. Procédé selon la revendication 8, selon lequel on réalise l'étape a/ par imprégnation des deux parties (4a, 4b) de renfort poreux après mise en place de celles-ci nues autour de l'élément bipolaire.

10. Procédé selon la revendication 8, selon lequel on réalise l'étape a/ avec des parties de renfort poreux pré imprégnées par au moins un polymère ou un ou plusieurs monomères.

11. Procédé selon l'une des revendications 8 à 10, selon lequel on réalise l'étape b/ à température ambiante.

12. Procédé selon l'une des revendications 8 à 11, selon lequel on réalise l'étape b/ avec une pression P comprise entre 0.05 MPa à 0.5 MPa.

13. Assemblage (8) comprenant un empilement d'accumulateurs selon la revendication 5, dans lequel les plots (3+, 3-) de polarité inverse entre deux accumulateurs adjacents sont en contact.

14. Assemblage (8') comprenant une rangée d'accumulateurs selon la revendication 5, dans lequel les plots (3+, 3-) de même polarité sont reliés entre eux par une barrette de connexion électrique (9+,9-).

15. Assemblage (8") comprenant un empilement d'accumulateurs selon la revendication 6, dans lequel les plots (3+, 3-) de même polarité entre deux accumulateurs adjacents sont en contact.

16. Assemblage selon l'une des revendications 13 à 15, dans lequel tous les accumulateurs ont une même puissance unitaire.

## Patentansprüche

1. Elektrochemische zweipolige Lithiumbatteriezelle (A), welche zumindest ein zweipoliges Element (1) und ein das zweipolige Element einkapselndes Gehäuse (4, 5) umfasst, **dadurch gekennzeichnet, dass** das Gehäuse aus einem Verbundwerkstoff besteht, welcher eine Matrix und mindestens eine poröse Verstärkung umfasst, von denen die Matrix zumindest ein gehärtetes Polymer (5) aufweist, welches die poröse(n) Verstärkung(en) (4) imprägniert, wobei die poröse(n) Verstärkung(en) (4) und das/die gehärtete(n) Polymer(e) (5) das zweipolige Element umhüllen und einen bestimmten Druck auf beiden Seiten des zweipoligen Elements aufrechterhalten, so dass ein bestimmter Kontakt zwischen seinen Bestandteilen aufrechterhalten wird.

2. Elektrochemische zweipolige Lithiumbatteriezelle (A) nach Anspruch 1, bei welcher die poröse(n) Verstärkung(en) ein oder mehrere Gewebe ist/sind und/oder eine oder mehrere Matte(n).

3. Elektrochemische zweipolige Lithiumbatteriezelle (A) nach Anspruch 1 oder 2, bei welcher die poröse(n) Verstärkung(en) (4) aus mindestens zwei Teilen (4a, 4b) besteht/bestehen, von denen einer auf jeder Seite des zweipoligen Elements (1) angeordnet ist.

4. Elektrochemische zweipolige Lithiumbatteriezelle (A) nach einem der vorhergehenden Ansprüche, bei welcher die Pole (3+, 3-), welche die Ladeanschlüsse der Batteriezelle bilden, durch Laschen gebildet sind, welche sich nach außen in der Wanddicke der Batterie erstrecken, indem sie über das/die gehärtete(n) Polymer(e) hinausstehen.

5. Elektrochemische zweipolige Lithiumbatteriezelle (A) nach einem derAnsprüche 1 bis 3, bei welcher die Pole (3+, 3-), welche die Ladeanschlüsse der Batteriezelle bilden, aus mindestens zwei Kontakten gebildet sind, von denen der eine auf einer Seite der Batteriezelle angeordnet ist und der andere mit entgegengesetzter Polarität auf der anderen Seite der Batteriezelle angeordnet ist.

6. Elektrochemische zweipolige Lithiumbatteriezelle (A) nach Anspruch 5, bei welcher die Pole aus mindestens vier Kontakten gebildet sind, wobei jede Seite der Batteriezelle mindestens zwei Pole aufweist, von denen einer negativ (3-) und einer positiv (3+) ist, mit einem Pol in jeder Ecke, und wobei die zwei Pole einer Seite jeweils gegenüber den zwei Polen der anderen Seite angeordnet sind, wobei zwei Pole einer selben Ecke dieselbe Polarität aufweisen.

7. Elektrochemische zweipolige Lithiumbatteriezelle (A) nach einem derAnsprüche 2 bis 6, bei welcher die poröse(n) Verstärkung(en) auf Kohlefaserbasis gebildet sind und das gehärtete Polymer ein Epoxidharz ist.

8. Verfahren zur Herstellung eines Gehäuses für eine elektrochemische zweipolige Lithiumbatteriezelle (A), welche ein zweipoliges Element aufweist, gemäß welchem die folgenden Schritte ausgeführt werden:
a) Einrichtung einer Untergruppe, welche ein zweipoliges Element (1) aufweist, zwischen zwei Abschnitten (4a, 4b) zumindest einer porösen Verstärkung, welche mit mindestens einem Polymer (5) oder einem oder mehreren Monomeren in einer Form M imprägniert ist;
b) Aufbringung eines bestimmten Drucks P auf beide Seiten der zwei Verstärkungsabschnitte, welche von der Untergruppe in der Form bis zur Aushärtung des Polymers oder der Polymere imprägniert werden.

9. Verfahren nach Anspruch 8, gemäß welchem Schritt a) durch Imprägnierung der beiden Abschnitte (4a, 4b) der porösen Verstärkung erfolgt, nachdem diese bloßen Abschnitte rund um das zweipolige Element eingerichtet worden sind.

10. Verfahren nach Anspruch 8, gemäß welchem Schritt a) mit den Abschnitten der porösen Verstärkung durchgeführt wird, wobei die Abschnitte mit mindestens einem Polymer oder einem oder mehreren Monomeren imprägniert sind.

11. Verfahren nach einem der Ansprüche 8 bis 10, gemäß welchem Schritt b) bei Umgebungsluft durchgeführt wird.

12. Verfahren nach einem der Ansprüche 8 bis 11, gemäß welchem Schritt b) mit einem Druck P zwischen 0,05 MPa bis 0,5 MPa durchgeführt wird.

13. Anordnung (8), welche einen Batteriestapel nach Anspruch 5 aufweist, bei welcher die Kontakte (3+, 3-) mit umgekehrter Polarität zwischen zwei benachbarten Batteriezellen in Kontakt miteinander sind.

14. Anordnung (8'), welche eine Reihe von Batteriezellen nach Anspruch 5 aufweist, bei welcher die Kontakte (3+, 3-) derselben Polarität durch eine elektrische Verbindungs-Klemmenleiste (9+, 9-) miteinander verbunden sind.

15. Anordnung (8"), welche einen Batteriestapel nach Anspruch 6 aufweist, bei welchem die Kontakte (3+, 3-) derselben Polarität zwischen zwei benachbarten Batteriezellen in Kontakt miteinander sind.

16. Anordnung nach einem der Ansprüche 13 bis 15, bei welcher alle Batteriezellen jeweils dieselbe Leistung aufweisen.

## Claims

1. A bipolar lithium electrochemical battery (A) including at least one bipolar element (1), and a casing (4, 5) encapsulating the bipolar element, **characterised in that** the casing consists of a composite material, including a matrix and at least one porous reinforcement, the matrix of which includes at least one hardened polymer (5) impregnating the porous reinforcement(s), where the porous reinforcement(s) (4) and the hardened polymer(s) (5) encase the bipolar element and apply a determined pressure either side of the latter, so as to maintain a determined contact between its constituents.

2. A lithium bipolar electrochemical battery (A) according to claim 1, in which the porous reinforcement(s) is/are fabric(s) and/or mat(s).

3. A lithium bipolar electrochemical battery (A) according to claim 1 or 2, in which the porous reinforcement(s) (4) consist(s) of at least two portions (4a, 4b), one on each face of the bipolar element (1).

4. A lithium bipolar electrochemical battery (A) according to one of the previous claims, in which the poles (3+, 3-) forming charging terminals of the battery are constituted by tabs which extend towards the outside from within the battery, projecting from the hardened polymer(s).

5. A lithium bipolar electrochemical battery (A) according to one of the claims 1 to 3, in which the poles (3+, 3-) forming charging terminals of the battery are constituted by at least two contacts, one fitted on to one face of the battery, and the other of opposite polarity fitted on to the other face of the battery.

6. A lithium bipolar electrochemical battery (A) according to claim 5, in which the poles are constituted by at least four contacts, where each face of the battery includes at least two poles, one negative (3-) and one positive (3+), with a pole in each corner, and both poles of one face are facing each of the two poles of the other face, and where two poles of a given corner are of the same polarity.

7. A lithium bipolar electrochemical battery (A) according to one of the claims 2 to 6, in which the porous reinforcement(s) are made from carbon fibres and the hardened polymer is an epoxy resin.

8. A method for producing a casing of a lithium bipolar electrochemical battery (A) including a bipolar element, according to which the following steps are accomplished:
a/ installation of a subassembly including a bipolar element (1) between two portions (4a, 4b) of at least one porous reinforcement impregnated by at least one polymer (5) or one or more monomers in a mould M,
b/ application of a determined pressure P either side of the two impregnated reinforcement portions of the subassembly in the mould, until the polymer(s) is/are hardened.

9. A method according to claim 8, according to which step a/ is accomplished by impregnation of both porous reinforcing portions (4a, 4b) after they are installed exposed around the bipolar element.

10. A method according to claim 8, according to which step a/ is accomplished with porous reinforcing portions which have been pre-impregnated by at least one polymer or one or more monomers.

11. A method according to one of the claims 8 to 10, according to which step b/ is accomplished at ambient temperature.

12. A method according to one of the claims 8 to 11, according to which step b/ is accomplished with a pressure P of between 0.05 MPa and 0.5 MPa.

13. An assembly (8) including a stack of batteries according to claim 5, in which the contacts (3+, 3-) of reverse polarity between two adjacent batteries are in contact.

14. An assembly (8') including a row of batteries according to claim 5, in which the contacts (3+, 3-) of the same polarity are connected to one another by an electrical connecting strip (9+, 9-).

15. An assembly (8") including a stack of batteries according to claim 6, in which the contacts (3+, 3-) of the same polarity between two adjacent batteries are in contact.

16. An assembly according to one of the claims 13 to 15, in which all the batteries have the same unit power.
